# EUROPÄISCHE PATENTSCHRIFT

(11) **EP 0 645 786 B1**
(45) Veröffentlichungstag und Bekanntmachung des Hinweises auf die Patenterteilung: **07.01.1998**
(21) Anmeldenummer: 94112125.3
(22) Anmeldetag: 03.08.1994
(51) Int. Cl.: H01F 5/02, B29C 45/26, B29C 45/34

(54) **Spulenkörper aus Kunststoff sowie Werkzeug und Verfahren zu seiner Herstellung**
Coil bobbin of plastic material as well as injection mould and process for producing it
Corps de bobine en matière plastique ainsi que moule d'injection et procédé pour sa fabrication

(30) Priorität: 23.09.1993 DE 4332339
(43) Veröffentlichungstag der Anmeldung: 29.03.1995
(73) Patentinhaber: HOHENLOHER KUNSTSTOFFTECHNIK GmbH & Co., 74613 Öhringen (DE)
(72) Erfinder: Lehmann, Eberhard, D-74629 Pfedelbach-Windischenbach (DE); Ahrens, Peter, D-74613 Öhringen (DE)
(74) Vertreter: Rehmann, Klaus-Thorsten, Dipl.-Ing.

(56) Entgegenhaltungen:
- EP-A- 0 033 943
- DE-A- 3 911 076
- DE-B- 2 141 278
- FR-A- 2 615 783

## Beschreibung

Die Erfindung betrifft einen Spulenkörper aus Kunststoff nach dem Oberbegriff des Anspruchs 1 und ein zur Herstellung des Spulenkörpers geeignetes Spritzwerkzeug und -verfahren.

Spulenkörper als elektrische Bauteile, die mit Kontaktstiften in vorgelochte Bohrungen einer gedruckten Schaltungsplatte eingesetzt werden, sind in verschiedenen Ausführungsformen bekannt.

Diese Spulenkörper sind einteilig und weisen beispielsweise an ihrer Unterseite eine Mehrzahl von Füßen auf, die als Abstandshalter für den Spulenkörper zur Schaltungsplatte dienen. Diese Füße bilden das Unterteil des Spulenkörpers. Üblicherweise werden die Spulenkörper im Spritzgießverfahren aus einem Thermoplast hergestellt, wobei das Spulenkörperoberteil während des Spritzgießens im Werkzeugoberteil und die Füße im Werkzeugunterteil ausgebildet werden. Der so hergestellte Spulenkörper weist folglich eine sichtbare, durch die Werkzeugtrennebene hervorgerufene Spritznaht auf.

Die Miniaturisierung elektronischer Komponenten führt dazu, daß auch die Größe der eingesetzten Spulenkörper immer geringer werden muß. Die gleichzeitig steigende Leistung der Komponenten führt zu einer höheren Erwärmung der Spulen. Aus diesem Grund müssen für die Drähte der Spulenwicklungen Isolierlacke mit einem immer höheren Schmelzpunkt verwendet werden.

Um die Wicklungsenden mit den in dem Spulenkörper eingespritzten Kontaktstiften verlöten zu können, muß die Löttemperatur über der Schmelztemperatur der Isolierlacke liegen.

Wenn die Löttemperatur aber über der Schmelztemperatur der Thermoplaste liegt, erweicht der Spulenkörper beim Löten, die Kontaktstifte können sich lockern und das Bauteil fällt später aus.

Aus diesem Grund müssen die Wicklungsenden heute vielfach manuell vom Isolierlack befreit werden, damit beim Verlöten mit einer unter der Schmelztemperatur des Spulenkörperwerkstoffs liegenden Temperatur gearbeitet werden kann.

Abhilfe könnte hier geschaffen werden, wenn anstelle eines Thermoplasts ein Duroplast verwendet würde. Das Problem liegt aber darin, daß die für diese Art von Spulenkörper eingesetzten Werkzeuge keine Duroplaste verarbeiten können, was im unterschiedlichen Verfestigungsverhalten von Thermoplasten und Duroplasten begründet ist.

Während sich ein Thermoplast durch Abkühlen verfestigt, geschieht dies bei einem Duroplast durch Aushärten, also Vernetzung der Molekülstrukturen.

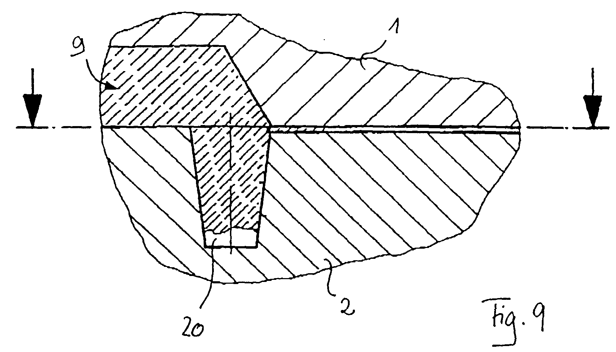

Die Figuren 7 bis 9 verdeutlichen wie bisher ein Spulenkörper hergestellt wird. Das Spritzwerkzeug besteht aus einem Werkzeugoberteil 1 und einem Werkzeugunterteil 2. Im Werkzeugoberteil ist die Formhöhlung 4 für das Spulenkörperoberteil und im Werkzeugunterteil 2 sind die Formhöhlungen 3 für die Füße ausgebildet. Der eingespritzte Kunststoff 9 fließt vom Werkzeugoberteil 1 in die Aushöhlungen 3 des Werkzeugunterteils 2. Durch die relativ lange flüssige Phase des Thermoplasts kann die aus den Formhöhlen verdrängte Luft durch das Material hindurch über einen in der Trennfuge des Werkzeug liegenden Entlüftungskanal 80 entweichen. Wenn in dieses Werkzeug nun ein Duroplast eingespritzt wird, bei dem sehr rasch die Vernetzung beginnt, und die Fließfront den Entlüftungskanal 80 überschritten hat, wird dieser kurze Zeit später durch den bereits ausgehärteten Duroplast so abgeschlossen, daß sich in der Formhöhle 3 ein Luftkisssen 20 ausbildet, das zwar komprimiert wird, aber nicht mehr durch den Entlüftungskanal entweichen kann. Die Folge hiervon ist, daß die Füße nicht vollständig ausgeformt werden und insbesondere nicht von gleicher Struktur sind.

Aus der FR-A-26 15 783 ist es beispielsweise bekannt, in einem Spritzgießwerkzeug eine mit der Formhöhle verbundene Blindkavität im Werkzeug vorzusehen, in die überschüssiges Gußmaterial, das unter Druck in das Werkzeug eingespritzt werden muß, entweichen kann. Wenn ein Duroplast verarbeitet wird, bei dem sehr rasch die Vernetzung beginnt, und die Fließfront diesen Verbindungskanal überschreitet, wird dieser kurze Zeit später durch den ausgehärteten Duroplast so abgeschlossen, daß keine Luft in die Blindkavität mehr gelangen kann und sich wie bereits oben erläutert in der Formhöhle ein Luftkissen ausbildet. Ein ähnliches Werkzeug zeigt die DE-B-21 41 278 wobei hier die Formhöhlung mit einem Ausgleichsraum über die Zuflußleitung verbunden ist, über die die Gußmasse in die Formhöhlung eingespritzt wird.

Der Erfindung liegt die Aufgabe zugrunde, einen Spulenkörper der bekannten Art konstruktiv so zu verbessern, daß er aus einem Duroplast herstellbar ist, und ein gattungsgemäßes Werkzeug so fortzubilden, daß mit ihm ein solcher Spulenkörper herstellbar ist, sowie ein geeignetes Spritzgießverfahren anzugeben.

Hinsichtlich des Spulenkörpers erfolgt die Lösung der Aufgabe mit den kennzeichnenden Merkmalen des Anspruchs 1. Hinsichtlich des Spritzwerkzeuges erfolgt die Aufgabenlösung durch die kennzeichnenden Merkmale des Anspruchs 9. Ein geeignetes Herstellungsverfahren gibt Anspruch 15 an. Vorteilhafte Ausgestaltungen der Erfindung geben die Unteransprüche wieder.

Dadurch, daß das Spulenkörperunterteil über seine volle Höhe eine angespritze, gegenüber dem Durchmesser des Unterteils, dünne Fahne aufweist, wird ein vom Nutzteil unabhängiger Raum geschaffen, in den die von der Fließfront verdrängte Luft ausweichen kann.

Wenn an das andere Ende der Fahne ein von den Abmessungen etwa dem Unterteil entsprechender Ansatz angegossen wird, ist sichergestellt, daß das gesamte verdrängte Volumen des Unterteils in den Ansatz ausweichen kann. Dieser für den Spulenkörper funktionslose Ansatz kann nach dem Entformen mit der Fahne zusammen abgebrochen werden, wobei dann der Fuß über seine volle Höhe eine Bruchkante aufweist, so daß es unerheblich ist, wenn sich hierin Spritzfehler aufgebaut haben sollten.

Wenn die Stärke der Fahne maximal einem Drittel des Durchmessers des Unterteils entspricht, wird das Entfernen des Ansatzes vereinfacht.

Die Fahne am Spulenkörperunterteil kann dadurch angespritzt werden, daß im Werkzeugunterteil eine Blindkavität vorgesehen ist, die durch einen über die volle Höhe der Formhöhlung verlaufenden Spalt mit der Formhöhlung verbunden ist. Dadurch wird erreicht, daß die Fließfront aus ihrer vertikalen Verlaufsrichtung in eine horizontale übergeht und wenn die Blindkavität vorzugsweise mit ihrem oberen Ende in einen waagerecht verlaufenden Entlüftungskanal mündet, bewirkt wird, daß die Luft vollständig entweichen kann.

Durch die Umlenkung der Fließfront gegen Ende des Spritzvorganges ist sichergestellt, daß die Nutzteile des Spulenkörpers fast vollständig ausgeformt sind und in den Formhöhlen keine von dem eingespritzten Kunststoff verdrängte Luft im Werkzeug eingeschlossen werden kann, sondern durch den parallel zur Fließfront verlaufenden Entlüftungskanal aus dem Werkzeug gedrückt werden kann.

Um die Ausformung in der Formhöhlung vollständig sicherzustellen, entspricht das Volumen der Blindkavität vorzugsweise dem Volumen der Formhöhle. Wenn ein Spulenkörper mit mehreren Unterteilen, beispielsweise Füße, gespritzt werden soll, wird jeder der Formhöhlungen eine eigene Blindkavität zugeordnet.

Nachfolgend soll die Erfindung anhand einer Zeichnung näher erläutert werden. Es zeigt:
- Figur 1: einen Teilschnitt durch das erfindungsgemäße Spritzwerkzeug,
- Figur 2: die Teildraufsicht auf das Werkzeugunterteil gemäß Sichtpfeil II-II nach Figur 1,
- Figuren 3 - 5: den Verlauf der Fließfront des eingespritzten Kunststoffs,
- Figur 6: einen erfindungsgemäß hergestellten Spulenkörper,
- Figur 7: einen Teilschnitt durch ein Spritzwerkzeug nach dem Stand der Technik,
- Figur 8: die Teildraufsicht auf das Unterteil gemäß Sichtpfeil VIII-VIII nach Figur 7 und
- Figur 9: das Fließbild für einen Duroplast am Ende des Spritzvorganges in dem Werkzeug nach Figur 7.

Figur 6 verdeutlicht den Aufbau des Spulenkörpers 10, der aus einem Oberteil 14 mit hieran ausgebildeten, nach unten ragenden Füßen 13 besteht. In der Unterseite des Spulenkörpers 10 sind mehrere Kontaktstifte 11 eingelassen, die mit den Spulenwicklungen verlötet werden. Die Füße 13 dienen als Abstandshalter für den Spulenkörper 10 auf der hier nicht dargestellten Platine, in die dieser durch die Kontaktstifte 11 gesteckt wird.

Das Spulenkörperoberteil 14 wird im Werkzeugoberteil 1 und die Füße 13 im Werkzeugunterteil 2 ausgeformt. Die Trennfuge 5 des Werkzeugs hinterläßt folglich am Spulenkörper 10 eine Spritznaht 15, die das Spulenkörperoberteil 14 vom Spulenkörperunterteil (Füße 13) abteilt. Über die volle Länge H der Füße 13 ist eine dünne Fahne 12 angespritzt, deren Stärke gegenüber dem Durchmesser der sich kegelstumpfförmig nach unten verjüngenden Füße 13 dünn ist.

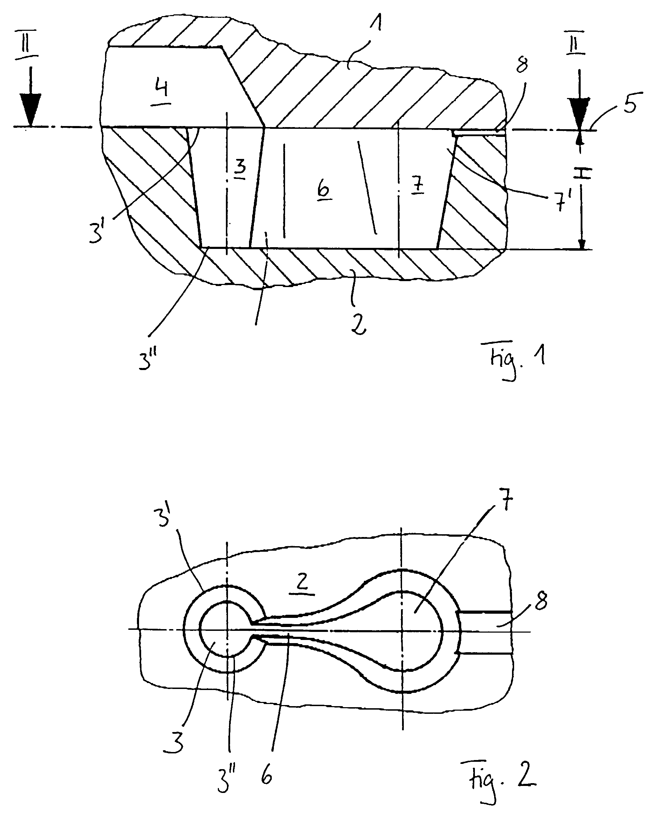

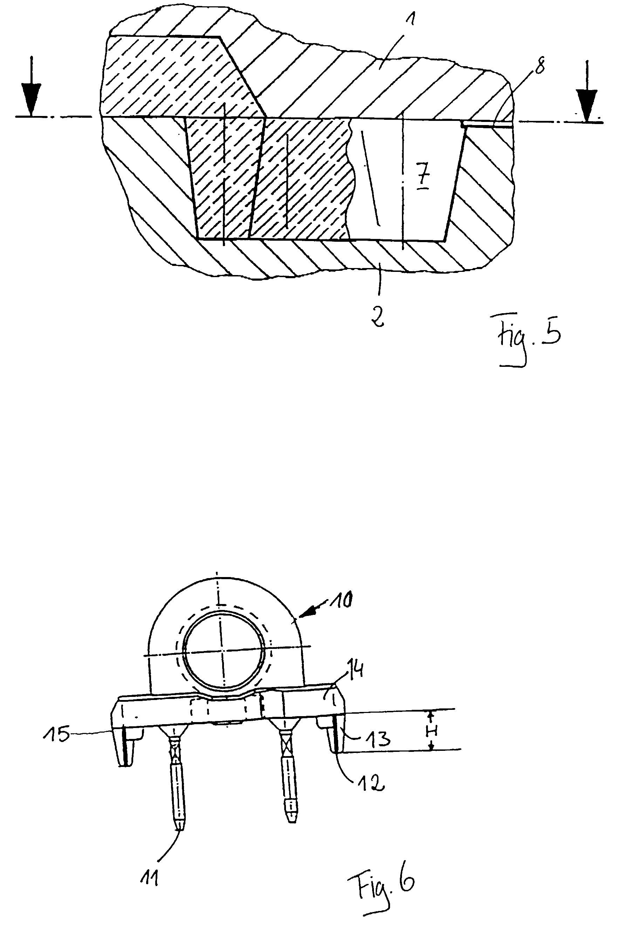

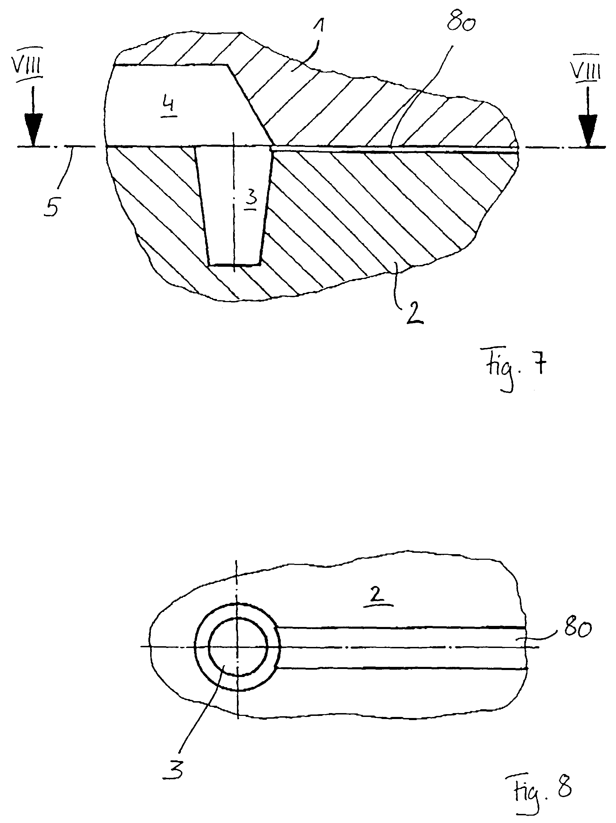

Für die Bauteile, die bei dem in den Figuren 1 bis 5 dargestellten erfindungsgemäßen Spritzwerkzeug gleich bzw. ähnlich sind zu dem nach dem Stand der Technik (Figuren 7 und 8), werden dieselben Positionsziffern verwendet.

Das Spritzwerkzeug besteht aus dem Werkzeugoberteil 1 und dem Werkzeugunterteil 2, die in bekannter Weise so gegeneinander verschließbar sind, daß der Spritzling ausgeformt werden kann, und bilden im geschlossenen Zustand zwischen sich eine Trennebene 5 aus. Im Werkzeugoberteil 1 ist die Formhöhlung 4 für das Spulenkörperoberteil 14 ausgebildet. Die Formhöhlung 3 für die Füße 13 ist im Werkzeugunterteil 2 ausgebildet. Die Formhöhlung 3 verjüngt sich kegelstumpfförmig nach unten und weist eine gegenüber der unteren Fläche 3" größere obere Fläche 3' auf.

Seitlich zur Formaushöhlung 3 ist ein über die volle Höhe H senkrecht nach unten verlaufender Spalt 6 im Werkzeugunterteil 2 vorgesehen, der einerseits in die Formhöhlung 3 und andererseits in eine Blindkavität 7 mündet. Bei der Blindkavität 7 handelt es sich ebenfalls um eine Formhöhlung, deren Volumen mindestens so groß ist, wie das der Formhöhlung 3, und die ihren Namen deshalb trägt, weil sie kein für den Spritzling (Spulenkörper 10) notwendiges Bauteil erzeugt. Die Blindkavität 7 mündet mit ihrem oberen Bereich 7' in einen Entlüftungskanal 8. Sowohl der Spalt 6 als auch die Blindkavität 7 sind kegelstumpfförmig ausgebildet, was zur Entformung des Spritzlings notwendig ist.

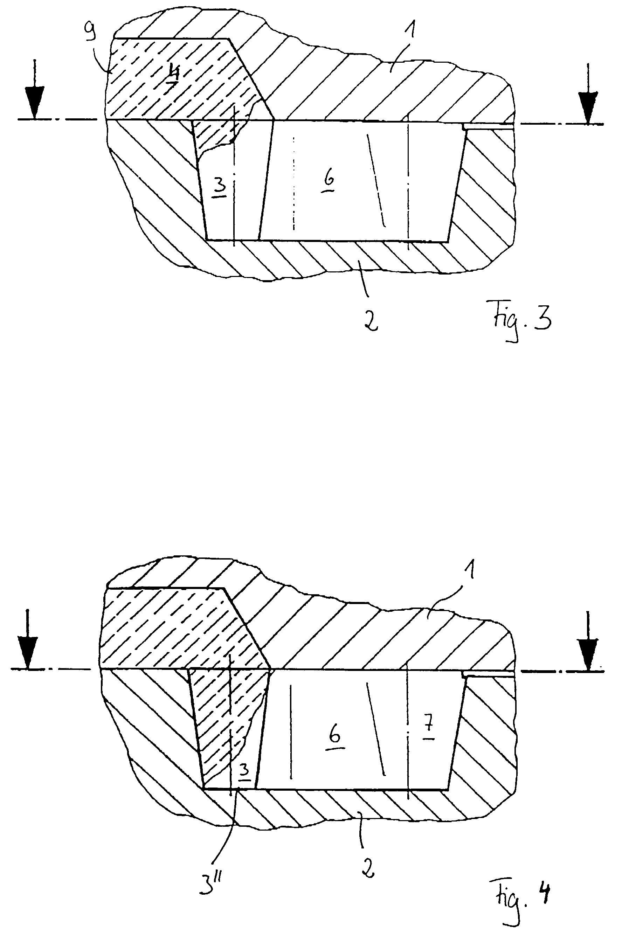

Wie die Figuren 3 bis 5 verdeutlichen breitet sich der eingespritzte Duroplast, bei dem es sich vorzugsweise um eine ungesättigte Polyesterverbindung handelt, über die Formhöhlung 4 in die Formhöhlung 3 aus. Die dabei verdrängte Luft weicht in den engen Spalt 6 aus. Die Formhöhlung 3 und der Spalt 6 werden gleichmäßig mit Kunststoff ausgefüllt und die Fließfront reitet sich weiter in Richtung der Blindkavität aus. Da der Materialfluß nun nicht mehr in vertikaler Richtung verläuft, sondern in horizontaler Richtung (vergl. Figur 5) wird aus der Blindkavität 7 die Luft vollständig über den Entlüftungskanal 8 abgeführt.

Nach dem Aushärten des Spritzlings wird dieser in bekannter, hier nicht dargestellter Weise über Auswurfstempel aus der Form entfernt.

## Patentansprüche

1. Spulenkörper mit einem Oberteil (14) und mindestens einem Unterteil (13), das sich kegelstumpfförmig nach unten verjüngt, der im Spritzgußverfahren hergestellt ist und wobei der Übergang vom Oberteil (14) zum Unterteil (13) durch die durch die Trennebene des Spritzwerkzeugs hervorgerufene Spritznaht (15) definiert ist, **dadurch gekennzeichnet**, daß das Unterteil (13) über seine volle Höhe (H) eine angespritzte dünne Fahne (12) aufweist.

2. Spulenkörper nach Anspruch 1, **dadurch gekennzeichnet**, daß die Fahne (12) vom Unterteil (13) abbrechbar ist.

3. Spulenkörper nach Anspruch 1, **dadurch gekennzeichnet**, daß die Fahne (12) das Unterteil (13) mit einem parallel hierzu verlaufenden, in etwa den Abmessungen des Unterteils (13) entsprechenden Ansatz verbindet.

4. Spulenkörper nach Anspruch 1, **dadurch gekennzeichnet**, daß mehrere Unterteile (13) vorgesehen sind.

5. Spulenkörper nach Anspruch 4, **dadurch gekennzeichnet**, daß vier identisch ausgebildete, gegenüber dem Oberteil symetrisch angeordnete Unterteile (13) vorgesehen sind.

6. Spulenkörper nach einem der vorstehenden Ansprüche, **dadurch gekennzeichnet**, daß als Werkstoff ein Duroplast eingesetzt ist.

7. Spulenkörper nach Anspruch 6, **dadurch gekennzeichnete**, daß der Werkstoff eine ungesättigte Polyesterverbindung ist.

8. Spulenkörper nach Anspruch 1, **dadurch gekennzeichnet**, daß die Stärke der Fahne (12) maximal einem Drittel des Durchmessers des Unterteils (13) entspricht.

9. Spritzgießwerkzeug mit einem Werkzeugoberteil (1) und einem Werkzeugunterteil (2), in denen die Formhöhlung (3,4) für einen Spritzling, insbesondere einen Spulenkörper und mindestens eine Blindkavität (7) ausgebildet ist, und zwischen denen im geschlossenen Zustand eine Trennebene (5) ausgebildet ist, **dadurch gekennzeichnet**, daß die mindestens eine Blindkavität (7) im Werkzeugunterteil (2) vorgesehen und durch einen über die volle Höhe (H) der Formhöhlung (3) verlaufenden Spalt (6) mit der Formhöhlung (3) verbunden ist.

10. Spritzgießwerkzeug nach Anspruch 9, **dadurch gekennzeichnet**, daß die Blindkavität (7) an ihrem oberen Ende (7') in einen waagerecht verlaufenden Entlüftungskanal (8) mündet.

11. Spritzgießwerkzeug nach Anspruch 9 oder 10, **dadurch gekennzeichnet**, daß das Volumen der Blindkavität (7) zumindest genauso groß ist wie das Volumen der mit ihr verbundenen Formhöhlung (3).

12. Spritzgießwerkzeug nach einem der vorstehenden Ansprüche, **dadurch gekennzeichnet**, daß einer Mehrzahl regelmäßig angeordneter Formhöhlungen (3) je eine Blindkavität (7) zugeordnet ist.

13. Spritzgießwerkzeug nach Anspruch 9, **dadurch gekennzeichnet**, daß der Spalt (6) gegenüber dem Durchmesser der Formhöhlung (3) schmal ist und zur Ausbildung einer dünnen Fahne (12) am Spritzling (10) dient.

14. Spulenkörper mit einem Oberteil (14) und mindestens einem Unterteil (13), das sich kegelstumpfförmig nach unten verjüngt, der im Spritzgießverfahren hergestellt ist und wobei der Übergang vom Oberteil (14) zum Unterteil (13) durch die durch die Trennebene des Spritzwerkzeugs hervorgerufene Spritznaht (15) definiert ist, **dadurch gekennzeichnet**, daß das Unterteil (13) über seine volle Höhe (H) eine Bruchkante aufweist.

15. Verfahren zur Herstellung eines Spritzgießteils, insbesondere eines Spulenkörpers mit einem Ober- und einem Unterteil, bei dem Kunststoff in plastischer Form unter hohem Druck in ein Spritzwerkzeug eingespritzt wird, das mindestens eine von der sich ausbildenden Fließfront verschlossene Formhöhlung aufweist, die im wesentlichen in der Entformungsrichtung liegt, **dadurch gekennzeichnet**, daß über die Höhe der Formhöhlung parallel zur Entformungsrichtung eine dünne Fahne angespritzt wird, deren Volumen mit einem Ausgleichsvolumen in Verbindung steht.

16. Verfahren nach Anspruch 15, **dadurch gekennzeichnet**, daß das Ausgleichsvolumen eine Blindkavität ist.

17. Verfahren nach Anspruch 16, **dadurch gekennzeichnet**, daß die Fließfront die im Werkzeug vorhandene Luft in einen mit dem Ausgleichsvolumen in Verbindung stehenden Entlüftungskanal drückt.

## Claims

1. Coil former with an upper part (14) and at least one lower part (13) tapering downwards in the form of a truncated cone, said coil former being produced in an injection-moulding process and the transition from the upper part (14) to the lower part (13) being defined by the injection-moulding seam (15) that is caused by the separation plane of the injection-moulding die, **characterised in that** the lower part (13) exhibits an integrally moulded thin vane (12) over its full height (H).

2. Coil former according to Claim 1, **characterised in that** the vane (12) is capable of being broken off from the lower part (13).

3. Coil former according to Claim 1, **characterised in that** the vane (12) connects the lower part (13) to an extension extending parallel thereto and corresponding approximately to the dimensions of the lower part (13).

4. Coil former according to Claim 1, **characterised in that** several lower parts (13) are provided.

5. Coil former according to Claim 4, **characterised in that** four identically formed lower parts (13) are provided which are arranged symmetrically in relation to the upper part.

6. Coil former according to one of the preceding claims, **characterised in that** by way of material use is made of a thermosetting plastic.

7. Coil former according to Claim 6, **characterised in that** the material is an unsaturated polyester compound.

8. Coil former according to Claim 1, **characterised in that** the thickness of the vane (12) corresponds maximally to one third of the diameter of the lower part (13).

9. Injection-moulding die with an upper die part (1) and a lower die part (2) in which the mould hollow (3,4) for an injection-moulded article, in particular a coil former, and at least one blind cavity (7) are formed and between which in the closed state a separation plane (5) is formed, **characterised in that** the at least one blind cavity (7) is provided in the lower die part (2) and is connected to the mould hollow (3) by means of a gap (6) extending over the full height (H) of the mould hollow (3).

10. Injection-moulding die according to Claim 9, **characterised in that** the blind cavity (7) opens at its upper end (7') into a ventilating channel (8) extending horizontally.

11. Injection-moulding die according to Claim 9 or 10, **characterised in that** the volume of the blind cavity (7) is at least as large as the volume of the mould hollow (3) connected to it.

12. Injection-moulding die according to one of the preceding claims, **characterised in that** in each instance a blind cavity (7) is assigned to a plurality of regularly arranged mould hollows (3).

13. Injection-moulding die according to Claim 9, **characterised in that** the gap (6) is narrow in relation to the diameter of the mould hollow (3) and serves to form a thin vane (12) on the injection-moulded article (10).

14. Coil former with an upper part (14) and at least one lower part (13) tapering downwards in the form of a truncated cone, said coil former being produced in an injection-moulding process and the transition from the upper part (14) to the lower part (13) being defined by the injection-moulding seam (15) that is caused by the separation plane of the injection-moulding die, **characterised in that** the lower part (13) exhibits a breaking edge over its full height (H).

15. Process for the production of an injection-moulded part, in particular of a coil former having an upper part and a lower part, wherein synthetic material is injected in plastic form under high pressure into an injection-moulding die comprising at least one mould hollow that is sealed by the flow front that forms, said mould hollow being located substantially in the mould-release direction, **characterised in that** over the height of the mould hollow parallel to the mould-release direction a thin vane is integrally moulded, the volume of which is connected to a compensating volume.

16. Process according to Claim 15, **characterised in that** the compensating volume is a blind cavity.

17. Process according to Claim 16, **characterised in that** the flow front presses the air which is present in the die into a ventilating channel that is connected to the compensating volume.

## Revendications

1. Corps de bobine comprenant une partie supérieure (14) et au moins une partie inférieure (13) qui s'amincit en forme de tronc de cône vers le bas, qui est fabriqué par un procédé de moulage par injection, le passage de la partie supérieure (14) à la partie inférieure (13) étant défini par la ligne de joint (15) engendrée par le plan de joint du moule d'injection, caractérisé en ce que la partie inférieure (13) présente sur toute sa hauteur (H) un mince aileron (12) moulé d'un seul tenant.

2. Corps de bobine selon la revendication 1, caractérisé en ce que l'aileron (12) est séparable de la partie inférieure (13) par rupture.

3. Corps de bobine selon la revendication 1, caractérisé en ce que l'aileron (12) raccorde la partie inférieure (13) avec un appendice correspondant, s'étendant parallèlement, qui est environ dans les dimensions de la partie inférieure (13).

4. Corps de bobine selon la revendication 1, caractérisé en ce qu'il est prévu plusieurs parties inférieures (13).

5. Corps de bobine selon la revendication 4, caractérisé en ce qu'il est prévu quatre parties inférieures (13) de même forme, disposées symétriquement par rapport à la partie supérieure (14).

6. Corps de bobine selon l'une des revendications précédentes, caractérisé en ce qu'une résine thermodurcissable est utilisée comme matière première.

7. Corps de bobine selon l'une des revendications précédentes, caractérisé en ce que la matière première est un composé de polyester insaturé.

8. Corps de bobine selon la revendication 1, caractérisé en ce que l'épaisseur de l'aileron (12) représente au maximum un tiers du diamètre de la partie inférieure (13).

9. Moule d'injection comprenant une partie supérieure (1) du moule et une partie inférieure (2) du moule, dans lesquelles sont formées la cavité de moulage (3, 4) pour une pièce moulée, notamment un corps de bobine, et au moins une cavité borgne (7), et formant entre elles un plan de joint (5) à l'état fermé, caractérisé en ce que l'au moins une cavité borgne (7) est prévue dans la partie inférieure (2) du moule et est raccordée à la cavité de moulage (3) par une fente (6) s'étendant sur toute la hauteur (H) de la cavité de moulage (3).

10. Moule d'injection selon la revendication 9, caractérisé en ce que la cavité borgne (7) débouche à son extrémité supérieure (7') dans un canal d'évacuation d'air (8) s'étendant horizontalement.

11. Moule d'injection selon la revendication 9 ou 10, caractérisé en ce que le volume de la cavité borgne (7) est au moins aussi grand que le volume de la cavité de moulage (3) qui lui est raccordée.

12. Moule d'injection selon l'une des revendications précédentes, caractérisé en ce qu'une cavité borgne (7) est affectée à chacune de plusieurs cavités de moulage (3) réparties régulièrement.

13. Moule d'injection selon la revendication 9, caractérisé en ce que la fente (6) est étroite par rapport au diamètre de la cavité de moulage (3) et sert à former un mince aileron (12) sur la pièce moulée.

14. Corps de bobine comprenant une partie supérieure (14) et au moins une partie inférieure (13) qui s'amincit en forme de tronc de cône vers ie bas, fabriqué par un procédé de moulage par injection, le passage de la partie supérieure (14) à la partie inférieure (13) étant défini par la ligne de joint (15) engendrée par le plan de joint du moule d'injection, caractérisé en ce que la partie inférieure (13) présente sur toute sa hauteur (H) une arête de rupture.

15. Procédé pour fabriquer une pièce moulée par injection, et notamment un corps de bobine comprenant une partie supérieure et une partie inférieure, dans lequel une matière plastique est injectée sous forme plastique à haute pression dans un moule d'injection qui présente au moins une cavité de moulage fermée par le front de coulée se formant, ladite cavité de moulage s'étendant sensiblement dans la direction de démoulage, caractérisé en ce qu'un mince aileron est moulé d'un seul tenant sur la hauteur de la cavité de moulage parallèlement à la direction de démoulage, le volume de l'aileron étant raccordé à un volume de compensation.

16. Procédé selon la revendication 15, caractérisé en ce que le volume de compensation est une cavité borgne.

17. Procédé selon la revendication i6, caractérisé en ce que l'air emmagasiné dans le moule est poussé par le front de coulée dans un canal d'évacuation d'air raccordé au volume de compensation.
